# NEUE EUROPÄISCHE PATENTSCHRIFT

(11) **EP 0 114 031 B2**
(45) Veröffentlichungstag und Bekanntmachung des Hinweises auf die Entscheidung über den Einspruch: **20.01.1993**
(45) Hinweis auf die Patenterteilung: 08.10.1986
(21) Anmeldenummer: 83810586.4
(22) Anmeldetag: 14.12.1983
(51) Int. Cl.: C09B 67/26, C09B 67/54, D06P 3/66

(54) **Verfahren zur Herstellung lagerstabiler wässriger Farbstofflösungen von wasserlöslichen Reaktivfarbstoffen**
Preparation process of storage-stable aqueous solutions of water-soluble reactive dyes
Procédé de préparation de solutions aqueuses, stables au stockage de colorants réactifs aquasolubles

(30) Priorität: 20.12.1982 CH 7430/82; 05.08.1983 CH 4265/83
(43) Veröffentlichungstag der Anmeldung: 25.07.1984
(73) Patentinhaber: CIBA-GEIGY AG, 4002 Basel (CH)
(72) Erfinder: Lacroix, Roger, Dr., F-68300 Village-Neuf (FR)

(56) Entgegenhaltungen:
- EP-A- 0 037 117
- EP-A- 0 037 382
- EP-A- 0 059 782
- DE-A- 1 925 104
- DE-A- 2 204 725
- DE-A- 2 417 255
- DE-A- 2 529 658
- DE-A- 2 805 891
- FR-A- 2 365 609
- FR-A- 2 416 926
- GB-A- 1 060 063
- GB-A- 1 359 898
- GB-A- 1 480 697
- GB-A- 2 165 556
- JP-A-55 135 170
- US-A- 3 125 564
- R. Rautenbach/R. Albrecht, Membrantrennverfahren, Ultrafiltration und Umkehrosmose, Otto Salle Verlag, Verlag Sauerländer, S. 188 (1981)
- Gmelins Handbuch de anorganischen Chemie, 8. Aufl. (1965), Verlag Chemie GmbH, Band "Phosphor", Teil C, S.239
- Ullmans Encyklopädie der technischen Chemie, 4.Aufl., Band 18, "Petrolsulfonate bis Plutonium", 1979, S.322
- Gmelins Handbuch der anorganischen Chemie, 8. Aufl, 1928, Band "Natrium", S. 899

## Beschreibung

Die vorliegende Erfindung betrifft ein Verfahren zur Herstellung von lagerstabilen wässrigen Farbstofflösungen von wasserlöslichen Reaktivfarbstoffen, die nach dem Verfahren hergestellten Farbstofflösunßen , sowie deren Verwendunß zum Färben und Bedrucken von cellulosischem Fasermaterial.

Flüssige Farbstoffpräparate, Lösungen oder Dispersionen, weisen gegenüber den Pulverformen eine Reihe von Vorteilen auf, z.B. keine Staubentwicklung beim Ansetzen von Klotz- und Färbeflotten oder auch Druckpasten, keine Benetzungsprobleme durch Klumpenbildung, keine fleckigen Färbungen durch ungenügend gelöste oder nicht Benügend feinverteilte Farbstoffteilchen.

Die Haltbarkeit von Flüssigpräparaten ist jedoch bei der Lagerung über längere Zeiträume oft nur unbefriedigend verglichen mit entsprechend formulierten Farbstoffpulvern oder Granulaten. Besondere Probleme treten hier bei wässrigen Lösungen von Reaktivfarbstoffen auf, deren Reaktivgruppe während der Lagerung durch Hydrolyse inaktiviert wird, was in der Applikation eine schlechte Farbausbeute zur Folge haben kann. Um die Hydrolyse möglichst weitgehend zu verhindern, versetzt man derartige Präparate üblicherweise mit einem Puffer und stellt so einen pH-Wert um den Neutralpunkt ein.

An die heute im Handel befindlichen flüssigen Reaktivfarbstoffpräparate werden im Bezug auf deren Temperaturstabilität hohe Anforderungen gestellt. Hierbei geht es nicht nur um die Hydrolysebeständigkeit, sondern die Präparate müssen zudem bei Temperaturen von - 10° bis + 40°C über mehrere Monate haltbar sein, ohne dass es zu Farbstoffausfällungen oder einem Auskristallisieren des zugesetzten Puffersystems kommt.

Bei der Herstellung von Lösungen mit einer Farbstoffkonzentration bis zu über 30 Gew.-%, aus denen auch bei längerer Lagerung kein Farbstoff ausfällt, hat sich die Verringerung des Inertsalzgehaltes im Rohfarbstoff als sehr wirkungsvoll erwiesen. Das geschieht, wie beispielsweise in der GB-PS 1 359 898 beschrieben am einfachsten mit Hilfe eines Membrantrennverfahrens, wobei man Membranen verwendet, die nur für niedermolekulare Substanzen, wie die anorganischen Inertsalze, durchlässig sind. Einschränkend muss jedoch geasgt werden, dass die bisher bekannten Membranen Erdalkalimetallkationen, insbesondere Calcium- und Mgnesiumionen selektiv zurückhalten, was zur Folge hat, dass die mittels Membrantrennverfahren erhaltenen Farbstofflösungen, je nach Härtegrad des zum Auswaschen der Inertsalze verwendeten Leitungswassers einen Calcium- bzw. Magnesiumionengehalt von bis zu 0,06 Gew. -% aufweisen. Dieser relativ hohe Gehalt an Calcium und Magnesium ist unerwünscht, da polyphosphathaltige Puffersysteme empfindlich reagieren, wobei es insbesondere in der Wärme zur Bildung von Ausfällungen kommt.

Andererseits neigt gerade der häufig verwendete Hydrogenphosphat/Dihydrogenphosphat-Puffer bei Temperaturen um 0 °C zur Kristallisation. In der Kälte ausgefallene Kristalle gehen auch beim Erwärmen des Präparats auf Raumtemperatur im allgemeinen nicht wieder in Lösung, sondern setzen sich als unlöslicher Rückstand auf dem Boden des Transportbehälters ab. Dadurch wird jedoch die Haltbarkeit und Anwendbarkeit solcher Präparate stark beeinträchtigt bis verunmöglicht.

AufgabedervorliegendenErfindungwares,lagerstabilewässrigeFarbstofflösungenvon Reaktivfarbstoffen herzustellen, bei denen es auch bei mehrmonatiger Lagerung (Temperaturbereich - 10° bis + 40°C) nicht zur Bildung unlöslicher Ausfällungen und Ablagerungen kommt. Die Lösung dieser Aufgabe besteht darin, dass man zum einen den Rohfarbstoff mittels Membranprozess entsalzt und zum anderen den üblicherweise in Flüssigformulierungen verwendeten Hydrogenphosphat/Dihydrogenphosphat-Puffer gegen einen Polyphosphat- bzw. Dihydrogenphosphat/Polyphosphat-Puffer ersetzt und das Membrantrennverfahren so durchgeführt, dass die Besamte Menge an Calcium- und Magnesiumionen in der Farbstofflösung nicht über einen Wert von 0,01 Gew.-% steigt.

Gegenstand der Erfindung ist somit ein Verfahren zur Herstellung lagerstabiler wässriger Farbstofflösungen von wasserlöslichen Reaktivfarbstoffen, ausgehend von einer wässrigen Lösung oder Suspension des rohen Reaktivfarbstoffs, welches mittels Membrantrennverfahren aufkonzentriert und zumindest teilweise entsalzt wird, dadurch gekennzeichnet, dass man einen Teil des Wassers, welches der Farbstofflösung bzw. - suspension während des Membrantrennverfahrens entzogen wird, laufend durch entmineralisiertes Wasser ersetzt, wodurch der Gehalt an Calcium- und Magnesiumionen in der Farbstofflösung nicht über einen Wert von 0,01 Gew.-% steigt; die aufkonzentrierte und entsalzte Farbstofflösung durch Zusatz eines Polyphosphatoder Dihydrogenphosphat/Polyphosphat-Puffers stabilisiert und gegebenenfalls eine, die Wasserlöslichkeit des Farbstoffs verbessernde Komponente zugibt.

Wässrige lagerstabile Reaktivfarbstofflösungen werden nach dem erfindungsgemässen Verfahren vor allem von solchen Reaktivfarbstoffen hergestellt, die Sulfogruppen enthalten, und die als faserreaktiven Rest mindestens einen 2, 3-Dichlorchinoxalinyl-, Monochlortriazinyl-, Dichlortriazinyl-, Monofluortriazinyl-, Monofluorpyrimidinyl-, Difluorpyrimidinyl-, einen Di- oder Trichlorpyrimidinyl- oder einen Chlor-difluorpyrimidinylrest aufweisen. Vom Chromophor her handelt es sich beispielsweise um metallfreie oder metallhaltige bzw. metallisierbare Mono-, Dis- und Polyazofarbstoffe, Pyrazolon-, Thioxanthron-, Oxazin-, Stilben-, Formazan-, Anthrachinon-, Nitro-, Methin-, Styryl-, Azastyryl-, Triphenylmethan- oder Phthalocyaninfarbstoffe; und insbesondere um Farbstoffe derAzo-, Anthrachinon- und Phthalocyaninreihe.

Die Farbstoffe können direkt in Form ihrer Syntheselösung oder -suspension dem Membrantrennverfahren unterworfen werden. Man kann aber auch von einem trockenen Rohfarbstoff ausgehen, den man zunächst in Wasser löst oder anschlämmt und dann mittels Membranprozess entsalzt uns aufkonzentriert.

Bei der Durchführung des Membrantrennverfahrens strebt man einen Entsalzungsgrad von über 90% an, d.h. dass weniger als 1 Gew.-%, vorzugsweise weniger als 0, 5 Gew.-% Salz in der Farbstofflösung verbleibt.

Die über die Membran ausgewaschenen Salze sind z.B. Natrium- und Kalisalze, wie Kaliumchlorid odersulfat, bzw. -hydrogensulfat und vor allem Natriumchlorid, welche durch Neutralisation und/oder Aussalzen des Farbstoffs in die Syntheselösung gelangt sind.

Unter dem Ausdruck Membrantrennverfahren wird insbesondere die Hyperfiltration vestanden. Bei diesem Trennverfahren handelt es sich im Gegensatz zur üblichen Filtration, wobei Feststoffteilchen von einer Flüssigkeit abgetrennt werden, um eine selektive Molekulartrennmethode. Die Membran wirkt als Molekularsieb, und vermag aufgelöste Stoffe, bei ausreichender Molekulargrösse an der Membrangrenzfläche zurückzuhalten. Zweckmässig verwendet man Membranen mit einem « cut off level », der eine mindestens 90%ige Retention aufweist, wenn diese einer kontinuierlichen Hyperfiltration während 20 bis 30 Minuten unterworfen werden. Hierbei handelt es sich um solche Membranen, deren Trenngrenze im Molekulargewichtsbereich von 300 bis 800, vorzugsweise 400 bis 500 liegt, und die symmetrisch oder insbesondere asymmetrisch sind. Sie lassen Wasser und aufgelöste Stoffe, die auf Grund ihres Molekulargewichts unterhalb der Trenngrenze liegen, bei geringem bis mittlerem Druck durchtreten. Üblicherweise werden Drucke von 10 bis 100 bar und vorzugsweise von 10 bis 30 bar verwendet.

Bewährt haben sich insbesondere Membranen aus Celluloseacetat, Polyvinylalkohol oder auch Polyacrylnitril, die durch Reaktivfarbstoffe modifiziert sind, die Sulfogruppen und/oder Carboxylgruppen enthalten. Derartige Membranen sind z.B. in der DE-OS 2 505 254 beschrieben. Die Membranen weisen einen Porendurchmesser von 0,1 bis 50 nm auf.

Die nach Durchführungen des Membrantrennverfahrens erhaltene praktisch Ca++ ⁻ und Mg++ -freie konzentrierte, salzarme Reaktivfarbstofflösung wird durch Zusatz eines Polyphosphat- oder Dihydrogenphosphat/Polyphosphat-Puffers stabilisiert, wobei als Polyphosphat vor allem das Tripolyphosphat verwendet wird. Dihydrogen- und Polyphosphat gelangen allgemein in Form ihrer Alkalisalze zur Anwendung.

Das fertige Farbstoffpräparat enthält den Puffer bevorzugt in einer Menge von 0, 5 bis 5 Gew.-%, wobei in Dihydrogenphosphat/Polyphosphat-Gemischen der Polyphosphatanteil überwiegt. Das Dihydrogenphosphat ermöglicht eine genaue Einstellung des pH-Wertes der Farbstofflösung, der vorzugsweise im Bereich von pH 7 bis 8 liegt.

Neben dem Puffer wird der aufkonzentrierten und entsalzten Lösung gegebenenfalls noch eine die Wasserlöslichkeit des Farbstoffs verbessernde Komponente zugegeben. Als derartiger Zusatz kommt insbesondere s-Caprolactam und N-Methylpyrrolidon in Frage.

Ferner können die nach dem erfindungsgemässen Verfahren hergestellten Lösungen noch mit kleineren Mengen (je ca. 1 bis 10 g/I) weiterer eigenschaftsverbessernder Hilfsmittel versehen werden, welche gegenüber dem Reaktivfarbstoff inert sind, wie z.B. Textilhilfsmittel, schaumdämpfende Hilfsmittel, Pilz- und/oder Bakterienwachstum hemmende Stoffe.

Die nach dem erfindungsgemässen Verfahren erhaltenen lagerstabilen, wässrigen Lösungen faserreaktiver Farbstoffe können zur Herstellung von Klotzflotten, Färbebädern und Druckpasten zum Färben und Bedrucken von natürlichen und regenerierten cellulosischen Fasermaterialien, vor allem Baumwolle und Viskose, verwendet werden.

Die Farbstofflösungen weisen bevorzugt die folgende Zusammensetzung auf:
10 bis 40 Gew.-% wasserlöslicher Reaktivfarbstoff,
0,5 bis 5 Gew.-% Polyphosphat- oder Dihydrogenphosphat /Polyphosphat-Puffer, weniger als 0,01 Gew.-% Calcium- oder Magnesiumionen, weniger als 1 Gew.-% Inertsalze,
50 bis 85 Gew.-% Wasser und gegebenenfalls 1 -20 Gew.-% eines Zusatzes, der die Wasserlöslichkeit des Farbstoffs erhöht.

In den nachfolgenden Beispielen, welche die Erfindung erläutern, bedeuten Teile, falls nichts anderes angegeben, Gewichtsteile und Prozente Gewichtsprozente. Für die Farbstoffmenge in der Flüssigformulierung ist in einigen Beispielen kein definierter Wert, sondern ein Bereich angegeben, da je nach Dauer der Hyperfiltration unterschiedliche Konzentrationen erhalten werden.

### Beispiel 1 :

11 kg Presskuchen des Farbstoffes der Formel 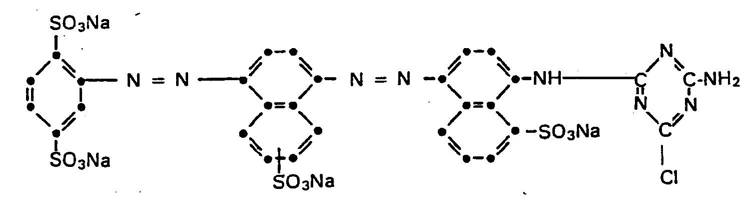 werden mit 24 kg entmineralisiertem Wasser angeschlämmt. Die erhaltene Suspension mit einem Trockengehalt von 12,1 % (5,2% NaCI) wird auf einer Anlage für Hyperfiltration (Membranfläche 0,84 m²) entsalzt und aufkonzentriert, wobei man eine modifizierte Celluloseacetatmembran verwendet, deren Hertstellung im Beispiel 1 der DE-OS 2 505 254 beschrieben ist, und die einen « cut-off-level » von 500 aufweist. Die Hyperfiltration wird bei einem pH-Wert von 6,5 bis 7,5 einer Temperatur von ca. 20°C und einem Druck von 25 bar durchgeführt. Bei der Entsalzung und Aufkonzentrierung werden 45 I entmineralisiertes Wasser zugegeben und 691 Permeat entfernt.

Man erhält 9,8 kg einer konzentrierten Farbstofflösung mit ca. 25% Trockengehalt (0,1 % NaCI) und ca. 40. 10-⁴% Ca⁺⁺.

97 Teile der so erhaltenen Farbstofflösung werden unter Rühren bei Raumtemperatur innerhalb von 10 Minuten mit 2 Teilen Natriumtripolyphosphat (NaTPP) und 0, 15 Teilen NaH₂P0₄ . 2H₂0 und 0,85 Teilen entmineralisiertem Wasser versetzt.

Man erhält eine dünnflüssige, während mehrerer Monate bei - 10°C bis + 40°C unverändert haltbare Flüssigformulierung folgender Zusammensetzung:
24 bis 27% Farbstoff
2,0% NaTPP
0, 15% NaH₂PO₄ · 2H₂0
ca. 0,1 % NaCl
ca. 0,004% Ca⁺⁺
Rest Wasser.

Der pH-Wert der Lösung liegt bei etwa 7,4.

### Beispiel 2:

10 kg des Presskuchens des Farbstoffes der Formel 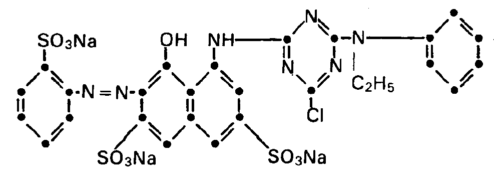 werden mit 33 kg entmineralisiertem Wasser angeschlämmt. Die erhaltene Suspension mit einem Trockengehalt von 9,9% (1,75% NaCI) wird auf einer Anlage für Hyperfiltration wie im Beispiel 1 beschrieben in einer Stufe entsalzt und aufkonzentriert. Bei der Entsalzung und Aufkonzentrierung werden 45 l entmineralisiertes Wasser zugegeben und 751 Permeat entfernt. Man erhält 13 kg einer Farbstofflösung mit einem Trockengehalt von ca. 27% (0,04% NaCI).

93,3 Teile der so erhaltenen Farbstofflösung werden mit 1,5 Teilen NaTPP und 0,15 Teilen NaH₂PO₄· 2H₂0 versetzt und mit 4,9 Teilen entmineralisiertem Wasser verdünnt. Man erhält eine dünnflüssige, während 6 Monaten bei - 10°C bis + 40° C unverändert haltbare Flüssigformulierung. Zusammensetzung der Formulierung: 23 bis 26% Farbstoff
1,5% NaTPP
0,15% NaH₂PO₄ · 2H₂0
< 0,04% NaCl
<0,001 % Ca⁺⁺

Rest Wasser

pH 7,5.

Wird der gleiche Rohfarbstoff hingegen mit Leitungswasser und nicht unter Zusatz von entmineralisiertem Wasser hyperfiltriert, so erhält man eine Flüssigformulierung, die bereits nach 15 Tagen deutliche Ausfällungen von Ca/Na-Polyphosphat zeigt.

### Beispiel 3:

12 kg Presskuchen des Farbstoffes der Formel 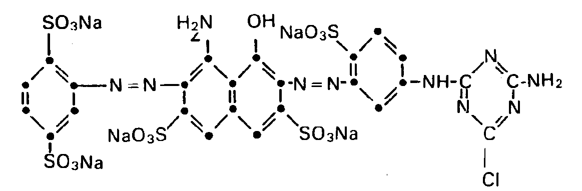 werden mit 33 kg entmineralisiertem Wasser angeschlämmt. Die erhaltene Suspension mit einem Trockengehalt von 12,8% (1,33% NaCI) wird wie im Beispiel 1 beschrieben entsalzt und aufkonzentriert.

Bei der Entsalzung und Aufkonzentrierung werden 45 l entmineralisiertes Wasser zugegeben und 70 l Permeat entfernt. Man erhält ca. 20 kg einer Farbstofflösung mit ca. 23% Trockengehalt (0,1 % NaCI ) und 80. 10⁻⁴% Ca⁺⁺.

60 Teile der so erhaltenen Farbstofflösung werden mit 1,5 Teilen NaTPP und 0, 17 Teilen NaH₂PO₄·2H₂O versetzt und mit 15 Teilen ε-Caprolactam und 23,3 Teilen entmineralisiertem Wasser verdünnt.

Man erhält eine Flüssigformulierung mit einem pH-Wert von 7,4 folgender Zusammensetzung:
13 bis 16% Farbstoff
15,0% ε-Caprolactam
1,5% NaTPP
0,17% NaH₂PO₄ · 2H₂0
ca. 0,06% NaCl
ca. 0,005% Ca⁺⁺
Rest Wasser.

### Beispiel 4:

10 kg Presskuchen des Farbstoffes der Formel 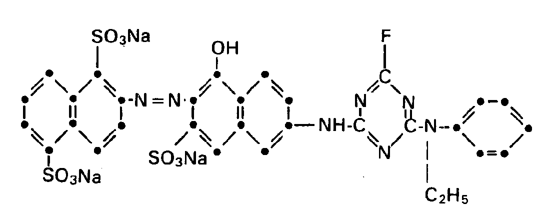 werden mit 35 kg entmineralisiertem Wasser angeschlämmt. Die erhaltene Suspension mit einem Trockengehalt von 11,5% (1,3% NaCI) wird wie im Beispiell beschrieben hyperfiltriert. Bei der Entsalzung und Aufkonzentrierung werden 25 I entmineralisiertes Wasser zugegeben und 49 I Permeat entfernt. Man erhält ca. 19 kg einer Farbstofflösung mit 23,3% Trockengehalt (0,08% NaCI) und 40.10-4% Ca++: 64 Teile der so erhaltenen Farbstofflösung werden mit 2,0 Teilen NaTPP und 0,15 Teilen NaH₂PO₄ · 2H₂0 versetzt und mit 34,35 Teilen entmineralisiertem Wasser verdünnt. Man erhält eine dünnflüssige, während mehrerer Monate bei - 10°C bis + 40°C unverändert haltbare Flüssigformulierung mit einem pH-Wert von 7,4 folgender Zusammensetzung: 14, 9 % Farbstoff
2,0% NaTPP
0,15% NaH₂PO₄ · 2H₂0
ca. 0,05% NaCl
ca. 0,0025% Ca⁺⁺
82,9% Wasser.

### Beispiel 5:

40 kg Syntheselösung des Rohfarbstoffes der Formel 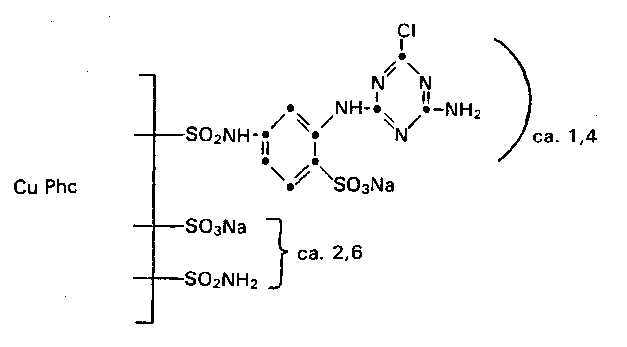 mit einem Trockengehalt von 15, 1 % (Salzgehalt 3,24%)
werden wie im Beispiel 1 beschrieben auf einer Anlage für Hyperfiltration in einer Stufe entsalzt und aufkonzentriert. Bei der Entsalzung und Aufkonzentrierung werden 55 I entmineralisiertes Wasser zugegeben und 80 l Permeat entfernt. Man erhält ca. 15 kg einer Farbstofflösung mit ca. 28% Trockengehalt (< 0,2 % NaCI) und 78. 10⁻⁴% Ca⁺⁺.

95 Teile der so erhaltenen Farbstofflösung werden mit 2 Teilen NaTPP, 0,1 Teilen NaH₂PO₄ · 2H₂0 und mit 3 Teilen ε-Caprolactam versetzt.

Man erhält eine Flüssigformulierung mit einem pH-Wert von 7,4 folgender Zusammensetzung:
24 bis 28 % Farbstoff
3,0% ε-Caprolactam
2,0% NaTPP
0,1 % NaH₂P0₄ . 2H₂0
<0,2% NaCl
ca. 0,007 % Ca⁺⁺
Rest Wasser.

### Beispiel 6:

45 kg Syntheselösung des Rohfarbstoffes des Formel 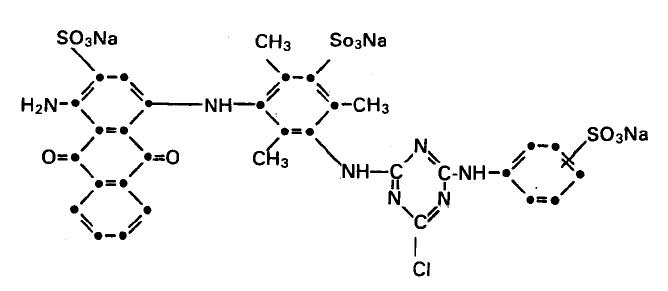 mit einem Trockengehalt von 16,0% (Salzgehalt 1,74%) werden wie im Beispiel 1 beschrieben in einer Stufe entsalzt und aufkonzentriert, wobei man 23,7 I Permeat entfernt. Man erhält 21,3 kg einer konzentrierten Farbstofflösung mit 30,1 % Trockengehalt (< 0,78% Natriumchlorid).

89 Teile der so erthaltenen Farbstofflösung werden mit 1,6 Teilen NaTPP und 0,2 Teilen NaH₂PO₄ · 2H₂0 versetzt und mit 5Teilen ε-Caprolactam und 4, 2 Teilen entmineralisiertem Wasser verdünnt.

Man erhält eine Flüssigformulierung mit einem pH-Wert von 7, 3 folgender Zusammensetzung:
26,0% Farbstoff
5,9 % ε-Caprolactam
1,6% NaTPP
0,2 % NaH₂P0₄ . 2H₂0
ca. 0,7% NaCl
ca. 0,008% Ca⁺⁺
66, 5 % Wasser.

### Beispiel 7:

Ca. 60 kg Syntheselösung des 1:2-Metallkomplexfarbstoffes der Formel 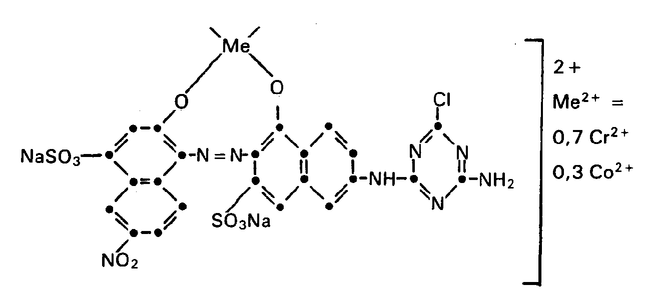 mit einem Trockengehalt von 19,4% (Salzgehalt 2,8%) werden wie im Beispiel 1 angegeben entsalzt und aufkonzentriert.

Bei der Entsalzung und Aufkonzentrierung werden 45 I entminerisiertes Wasser zugegeben und 80 l Permeat entfernt. Man erhält ca. 35 kg einer konzentrierten Farbstofflösung mit ca. 35% Trockengehalt (0,18% NaCI) und ca. 45. 10-⁴% Ca⁺⁺.

67,4 Teile der so erhaltenen Farbstofflösung werden mit 2,2 Teilen NaTPP versetzt und mit 30,4 Teilen entmineralisiertem Wasser verdünnt. Man erhält eine dünnflüssige, während mehrerer Monate bei - 10°C bis + 40°C unverändert haltbare Flüssigformulierung mit einem pH-Wert von 7,4 folgender Zusammensetzung: 21 bis 24% Farbstoff
2,2% NaTPP
ca. 0,0028% Ca⁺⁺
Rest Wasser.

### Beispiel 8:

10 kg Presskuchen des Farbstoffes der Formel 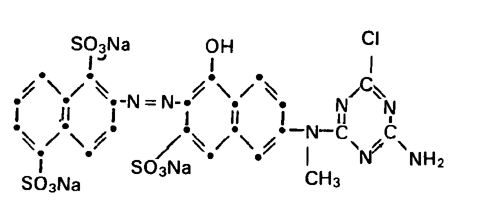 werden mit ca. 25 kg entmineralisiertem Wasser angeschlämmt. Die erhaltene Suspension mit einem Trockengehalt von 13,2% (3,0% NaCl) wird auf einer Anlage für Hyperfiltration (Membranfläche 0,84 m²) entsalzt und aufkonzentriert (wie im Beispiel 1 beschrieben). Bei der Entsalzung und Aufkonzentrierung werden 35 I entmineralisiertes Wasser zugegeben und 58 l Permeat entfernt. Man erhält ca. 12 kg einer Farbstofflösung mit einem Trockengehalt von ca. 29% (Gehalt an NaCl < 0,1 %).

79,2 Teile der so erhaltenen Farbstofflösung werden mit 1,5 Teilen NaTPP versetzt und mit 19, 3 Teilen entmineralisiertem Wasser verdünnt. Man erhält eine dünnflüssige während 6 Monaten bei - 10° C bis + 40° C unverändert haltbare Flüssigformulierung der folgenden Zusammensetzung:
21 bis 24% Farbstoff
1,5% NaTPP
< 0,1 % NaCl
ca. 0,006% Ca⁺⁺
Rest Wasser.

Die Flüssigformulierung weist einen pH-Wert von 7, 9 auf.

### Beispiel 9:

45 kg Syntheselösung des Rohfarbstoffs der Formel 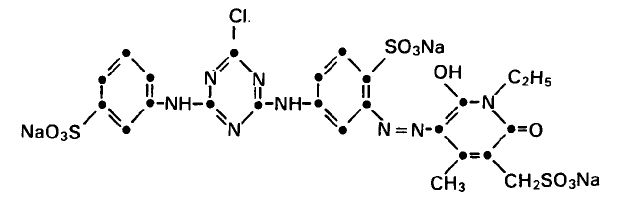 mit einem Trockengehalt von 16% (Salzgehalt 5,9%) werden wie im Beispiel 1 angegeben entsalzt und aufkonzentriert. Während der Hyperfiltration werden 75 l entmineralisiertes Wasser zugegeben und 1051 Permeat entfernt. Man erhält 15 kg einer Farbstofflösung mit einem Trockengehalt von ca. 30%. Der Gehalt an Kochsalz liegt bei <0,2% und die Ca-Ionenkonzentration beträgt 55·10⁻⁴%.

62 Teile der konzentrierten und entsalzten Farbstofflösung werden mit 0,8 Teilen Natriumtripolyphosphat versetzt und mit 37,2 Teilen entmineralisiertem Wasser verdünnt. Man erhält eine dünnflüssige, während mehrerer Monate bei - 10°C bis + 40°C unverändert haltbare Flüssigformulierung mit einem pH-Wert von 7,5 folgender Zusammensetzung:
17 bis 19 % Farbstoff
0,8% NaTPP
ca. 0,0034% Ca⁺⁺
Rest Wasser.

### Beispiel 10:

9 kg Presskuchen des Farbstoffs der Formel 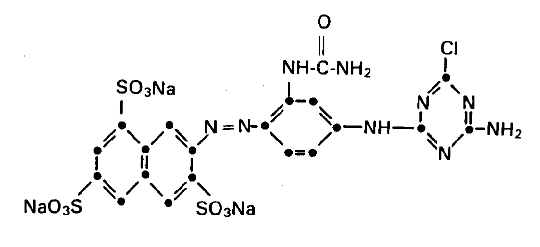 werden in ca. 27 I entmineralisiertem Wasser angeschlämmt. Man erhält eine Farbstoffsuspension mit einem Trockengehalt von 12,1 % (2, 3% NaCl ), die anschliessend, wie im Beispiel 1 beschrieben, entsalzt und aufkonzentriert wird. Während der Hyperfiltration werden 30 I entmineralisiertes Wasser zugegeben und ca. 54,5 kg Permeat entfernt. Die am Ende der Hyperfiltration vorliegende Farbstofflösung (ca. 11,5 kg) hat einen Trockengehalt von 28,9% (0,1 NaCI; 62 10-4 % Ca-Ionen).

48 Teile der so erhaltenen Farbstofflösung werden mit 1 Teil NaTPP und 5 Teilen Caprolactam versetzt und mit 46 Teilen entmineralisiertem Wasser verdünnt. Die so hergestellte Flüssigformulierung mit einem pH-Wert von 7,6 hat die folgende Zusammensetzung :
14 % Farbstoff
5% Caprolactam
1 % NaTPP
0,003% Ca⁺⁺
80% Wasser.

### Beispiel 11:

10 kg Presskuchen des Farbstoffs der Formel 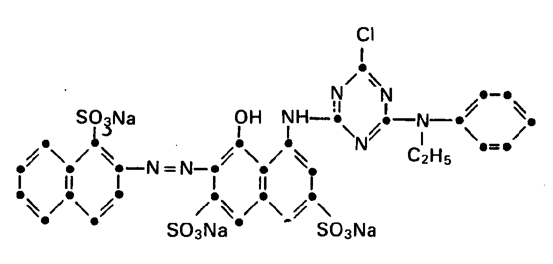 werden in 35 kg entmineralisiertem Wasser angeschlämmt. Die erhaltene Farbstoffsuspension mit einem Trockengehalt von 12,2% (NaCI-Gehalt 1 %) wird mittels Hyperfiltration, wie in Beispiel 1 angegeben, entsalzt und aufkonzentriert. Während der Hyperfiltration werden 40 l entmineralisiertes Wasserzugegeben und insgesamt 62 kg Permeat entfernt. Man erhält 3 kg einer Farbstoffsuspension mit einem Trockengehalt von ca. 22 % (NaCI-Gehalt < 0,1 %; Ca-Gehalt 36 - 10-⁴% ).

82, 5 Teile der aufkonzentrierten und entsalzten Farbstoffsuspension werden mit 1,5 Teilen Natriumtripolyphosphat versetzt und mit 10 Teilen Caprolactam und 6 Teilen entmineralisiertem Wasser verdünnt. Die auf diese Weise hergestellte Flüssigformulierung hat einen pH-Wert von 7,5 und weist die folgende Zusammensetzung auf:
16 bis 19% Farbstoff
10% Caprolactam
1,5 % NaTPP
0,003% Ca⁺⁺
Rest Wasser.

## Patentansprüche

1. Verfahren zur Herstellung lagerstabiler wässriger Farbstofflösungen von wasserlöslichen Reaktivfarbstoffen, ausgehend von einer wässrigen Lösung oder Suspension des rohen Reaktivfarbstoffs, welche mittels Membrantrennverfahren aufkonzentriert und zumindest teilweise entsalzt wird, dadurch gekennzeichnet, dass man einen Teil des Wassers, welches der Farbstofflösung bzw. -suspension während des Membrantrennverfahrens entzogen wird, laufend durch entmineralisiertes Wasser ersetzt, wodurch der Gehalt an Calcium- und Magnesiumionen in der Farbstofflösung nicht über einen Wert von 0,01 Gew.- ⁰% steigt; die aufkonzentrierte und entsalzte Farbstofflösung durch Zusatz eines Polyphosphat- oder Dihydrogenphosphat/Polyphosphat-Puffers stabilisiert und gegebenenfalls eine, die Wasserlöslichkeit des Farbstoffs verbessernde Komponente zugibt.

2. Verfahren gemäss Anspruch 1, dadurch gekennzeichnet, dass der Salzgehalt der Farbstofflösung mittels Membrantrennverfahren auf einen Wert unter 1 Gew.-%, vorzugsweise unter 0,5 Gew.-% gesenkt wird.

3. Verfahren gemäss den Ansprüchen 1 und 2, dadurch gekennzeichnet, dass das Membrantrennverfahren aus einer Hyperfiltration besteht, die bei einem Druck von 10 bis 100 bar, vorzugsweise 10 bis 30 bar durchgeführt wird.

4. Verfahren gemäss Anspruch 3, dadurch gekennzeichnet, dass man eine, durch ionische Gruppen enthaltende, polyfunktionelle Verbindungen modifizierte, asymmetrische Membran verwendet, deren Grundgerüst aus Celluloseacetat, Polyacrylnitril oder einem Copolymeren aus Acrylnitril und anderen äthylenisch ungesättigten Monomeren besteht und deren Poren einen Durchmesser von 0,1 bis 50 nm aufweisen.

5. Verfahren gemäss Anspruch 1, dadurch gekennzeichnet, dass man als Puffer einen Tripolyphosphat-oder DihydrogenphosphaUTripolyphosphat-Puffer zusetzt.

6. Verfahren gemäss Ansprüchen 1 und 5, dadurch gekennzeichnet, dass der Puffer in einer Menge von 0,5 bis 5 Gew.-%, bezogen auf das fertige Feststoffpräparat zugesetzt wird.

7. Verfahren gemäss Anspruch 1, dadurch gekennzeichnet, dass man durch den Zusatz des Puffers den pH-Wert der Farbstofflösung auf einen Wert von 7 bis 8 einstellt.

8. Verfahren gemäss Anspruch 1, dadurch gekennzeichnet, dass man als eine die Wasserlöslichkeit des Farbstoffes verbessernde Komponente s-Caprolactam oder N-Methylpyrrolidon zugibt.

## Claims

1. A process for the preparation of stable aqueous solutions of water-soluble reactive dyes, starting from an aqueous solution or suspension of the crude reactive dye which is concentrated by means of a membrane separation process and at least partially removing salts therefrom, which process comprises continuously replacing part of the water which is drawn off from the dye solution or suspension during the membrane separation with demineralised water, whereby the concentration of calcium and magnesium ions in the dyestuff solution does not exceed 0.01 % by weight, stabilising the concentrated and desalted dye solution by addition of a polyphosphate or dihydrogen phosphate-polyphosphate buffer, and optionally adding a component which improves the water-solubility of the dye.

2. A proces according to claim 1, wherein the salt concentration of the dyestuff solution is lowered by the membrane separation process to less than 1 % by weight, preferably to less than 0.5% by weight.

3. A process according to either of claims 1 or 2, wherein the membrane separation process consists of a hyperfiltration (reverse osmosis) which is carried out under a pressure of 10 to 100 bar, preferably of 10 to 30 bar.

4. A process according to claim 3, which comprises the use of an asymmetrical membrane which is modified by polyfunctional compounds which contain ionic groups, the basic skeleton of which membrane consists of cellulose acetate, polyacrylnitrile or a copolymer of acrylonitrile and other ethylenically unsaturated monomers, and whose pores have a diameter of 0.1 to 50 nm.

5. A process according to claim 1, wherein a tripolyphosphate or dihydrogen phosphate!tripolyphosphate mixture is added as buffer.

6. A process according to either of claims 1 or 5, wherein the buffer is added in an amount of 0.5 to 5% by weight, based on the final dyestuff formulation.

7. A process according to claim 1, wherein the pH of the dyestuff solution is adjusted to 7-8 by addition of the buffer.

8. A process according to claim 1, wherein s-caprolactam or N-methylpyrrolidone is added as component which improves the water-solubility of the dye.

## Revendications

1. Procédé de préparation de solutions aqueuses, stables au stockage, de colorants réactifs solubles dans l'eau, à partir d'une solution ou suspension aqueuse du colorant réactif brut, qui est concentrée et au moins partiellement dessalée par un procédé de séparation sur membrane, caractérisé en ce que l'on remplace parde l'eau déminéralisée, en continu, une partie de l'eau qui est retirée de la solution ou suspension de colorant au cours du procédé de séparation sur membrane, grâce à quoi la teneur en ions calcium et magnésium de la solution de colorant ne dépasse pas une valeur de 0, 01 % en poids; en ce que l'on stabilise la solution de colorant concentrée et déssalée par addition d'un tampon polyphosphate ou dihy- drogénophosphate/polyphosphate, et que l'on ajoute éventuellement un composant qui améliore la solubilité du colorant dans l'eau.

2. Procédé conforme à la revendication 1, caractérisé en ce que la teneur en sel de la solution de colorant est abaissée, grâce au procédé de séparation sur membrane, à une valeur inférieure à 1 % en poids, de préférence inférieure à 0,5% en poids.

3. Procédé conforme aux revendications 1 et 2, caractérisé en ce que le procédé de séparation sur membrane consiste en une hyperfiltration, qui est effectuée sous une pression de 10 à 100 bars, de préférence de 10 à 30 bars.

4. Procédé conforme à la revendication 3, caractérisé en ce que l'on utilise une membrane asymétrique, modifiée par des composés polyfonctionnels contenant des groupes ioniques, dont la trame est constituée d'acétate de cellulose, de polyacrylonitrile, ou d'un copolymère de l'acrylonitrile et d'un autre monomère à insaturation éthylénique, et dont les pores présentent un diamètre allant de 0,1 à 50 nm.

5. Procédé conforme à la revendication 1, caractérisé en ce que l'on ajoute comme tampon un tampon tripolyphosphate ou dihydrogénophosphate/tripolyphosphate.

6. Procédé conforme aux revendications 1 et 5, caractérisé en ce que l'on ajoute le tampon en une quantité allant de 0,5 à 5% en poids, par rapport à la préparation finie de colorant.

7. Procédé conforme à la revendication 1, caractérisé en ce que, par addition du tampon, on ajuste le pH de la solution de colorant à une valeur allant de 7 à 8.

8. Procédé conforme à la revendication 1, caractérisé en ce que l'on ajoute de l's-caprlactame ou de la N-méthylpyrrolidone, en tant que composant améliorant la solubilité du colorant dans l'eau.
